# EUROPEAN PATENT SPECIFICATION

(11) **EP 1 222 046 B1**
(45) Date of publication and mention of the grant of the patent: **27.04.2005**
(21) Application number: 00959102.5
(22) Date of filing: 05.09.2000
(51) Int. Cl.: B23B 31/40

(54) **PNEUMATICALLY ACTUATED DEVICE FOR CENTERING A WORKPIECE IN A MACHINE**
PNEUMATISCH BETÄTIGTE VORRICHTUNG ZUM ZENTRIEREN EINES WERKSTÜCKES IN EINER MASCHINE
DISPOSITIF A COMMANDE PNEUMATIQUE PERMETTANT DE CENTRER UNE PIECE A USINER DANS UNE MACHINE

(30) Priority: 06.09.1999 SE 9903123
(43) Date of publication of application: 17.07.2002
(73) Proprietor: Scania CV Aktiebolag (publ), 151 87 Södertälje (SE)
(72) Inventor: HJORTSBERG, Ake, S-151 39 Södertälje (SE)
(86) International application number: PCT/SE2000/001694
(87) International publication number: WO 2001/021351

(56) References cited:
- EP-A1- 0 516 596
- WO-A1-94/06590
- DE-A1- 3 233 868
- DE-A1- 19 924 309
- US-A- 3 762 730

## Description

The present invention relates to an arrangement for centering a workpiece in a machine tool according to the preamble of claim 1.

### State of the art

Machining, e.g. the milling of gearwheels, involves the workpiece having to be clamped centredly in a working machine. A centering mandrel which internally centres the workpiece in the machine tool is often used for the purpose.

A mandrel for centering workpieces in a machine tool is known from WO94/06590 A1. The mandrel incorporates a movable ram driven by compressed air which imparts to it an axial motion. The ram is provided with a group of centering pins which are acted upon by inclined planes arranged on the ram. When the ram moves axially, the inclined planes move the centering pins radially outwards so that the workpiece becomes centred relative to the centreline of the mandrel. The mandrel can then be run downwards through the centrehole of the workpiece.

The mandrel is fastened in the upper portion of the machine tool in a vertically movable slide and a machining process is commenced by the mandrel being run downwards through the workpiece centrehole so that the mandrel's centering pins assume a vertical position in order to be able to centre the workpiece. The latter is placed on a fixture element which itself is fastened to the machine table of the machine tool. The lower portion of the mandrel is run further downwards in a precision guide in said fixture element and is fixed by a gripping device in the worktable. It is therefore important that the upper slide is orientated so as to be situated linearly above the guide in the fixture element, so that the mandrel will be radially fixed to the machine tool. It is often difficult to orientate the upper slide accurately, which means that the machining results may be unsatisfactory.

As the whole mandrel has to be threaded through the centrehole in the workpiece, the dimensions of the whole mandrel have to be adapted to the diameter of the hole in the workpiece. When machining workpieces with small-diameter holes, the whole mandrel will therefore be of small diameter. This also means that mandrel rerigging involves changing the guide in the fixture element. A small-diameter mandrel is weaker than a larger one, so the fastening in the fixture element may be unstable when machining workpieces with small dimensions.

During the actual machining process, cutting oil is used to cool the workpiece and the cutting tools. This is called wet machining. The cutting oil may also have the function of removing dust and cuttings which arise during the process. Cutting oil does have, however, a number of disadvantages, including environmental problems, affecting both the internal working environment and the global environment. The measures required for preventing this entail major costs.

A quicker, less expensive and more environmentally friendly approach to, for example, gearwheel milling would be so-called dry machining, i.e. machining without any cooling cutting fluid. This involves a problem, however, in that present-day centering mandrels are not suited to this type of machining, since it employs no cutting oil to remove cuttings and dirt.

The arrangement in WO94/06590 A1 is suitable for use in wet machining. Using that arrangement in dry machining would entail the risk of dirt, such as dust and cuttings, being entrained and becoming caught in the bearings between moving surfaces each time the mandrel is run downwards through the workpiece centrehole in order to lock it to the fixture table. Such dirt might disrupt the machining process, resulting in quality problems.

### Object of the invention

The object of the invention is to eliminate said disadvantages and to provide, for the centering of a workpiece in a machine tool, a new type of arrangement which achieves great centering accuracy and good stability and is suitable for dry machining. This is achieved by an arrangement which exhibits the features defined in claim 1.

The problem is solved by using a two-part mandrel which comprises a centering lower element detachably fitted in the fixture element of the machine table and a retaining upper element fastened to the upper portion of the machine tool.

The workpiece is placed on the upper portion of the centering element before the two mandrel elements are brought together to form a co-operating unit. In machining a workpiece with a small-diameter hole, only the upper portion of the centering element need be of likewise small size, since the workpiece is only threaded onto this portion. There is therefore no need for the whole mandrel to be run through the centrehole. The guide in the fixture element therefore does not depend on the diameter of the hole in the workpiece. The lower portion of the centering element may thus be of substantially larger size than the upper portion on which the workpiece is threaded. The result is stable mutual positioning between the mandrel and the fixture element.

As only the size of the upper portion needs to be suited to the size of the workpiece, all the mandrels may have the same diameter for the portion which is fitted into the fixture element. This dimension can be standardised, which means that the guide in the fixture element can be designed to suit it. Hence there is no need for the guide in the fixture element to be changed when rerigging to different mandrels, so the mandrels will be easy to rerig, resulting in a more efficient working process.

The upper portion of the mandrel is arranged with respect to the machine tool by means of a fastening arrangement which allows small radial movements when the two mandrel elements are being assembled. The centering element being stably fitted in the fixture element of the machine table eliminates the problem of alignment between the upper slide of the machine and the fixture element guide. The radial play also means that the machining process takes place centredly, since the mandrel is only guided by being fitted in the fixture element.

The only function of the upper portion of the machine tool is to lower the fastening element towards the workpiece, so this upper portion can be of substantially simpler design, and hence less expensive, than previously known centering arrangements whereby the actual centering element has been fitted in the upper portion and has had a radially guiding function.

The portion of the mandrel which is fastened in the fixture element of the machine table is provided with annular grooves which communicate with a pressure source. The bearing between the mandrel and the fixture element is subjected to pneumatic pressure so that there is microleakage to keep the bearing free from disruptive dirt and dust. This means that the mandrel can be used in dry machining, resulting in major environmental and time gains.

### List of drawings

- Figure 1: depicts schematically a longitudinal section of a mandrel according to the invention fitted vertically to a machine tool.
- Figure 2: depicts the centering element of a mandrel in an alternative embodiment.

### Description of an embodiment

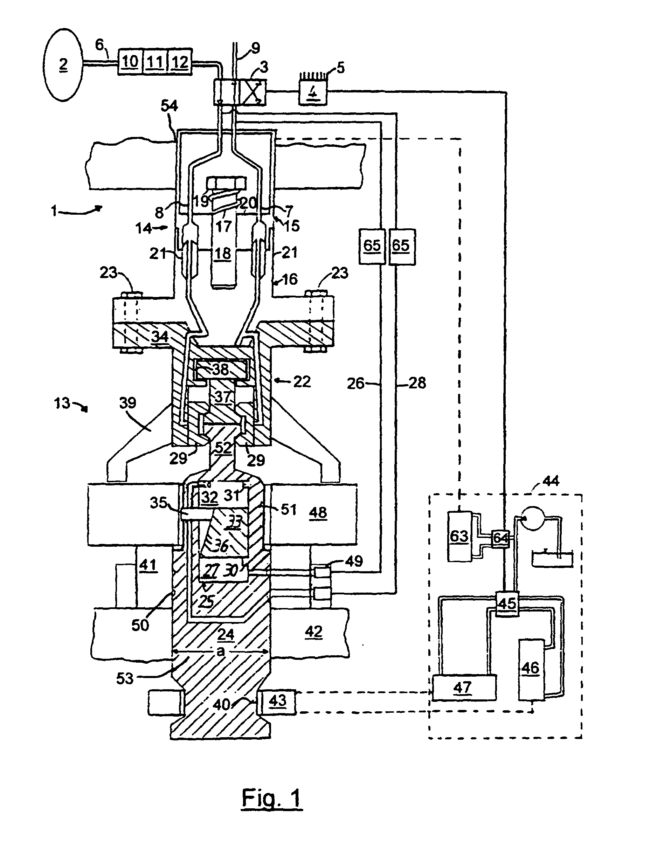

In Figure 1, reference 1 denotes an arrangement for internal centering of a workpiece for machining in a machine tool, particularly for milling of gearwheels. The arrangement incorporates a machine tool (1) with a nonrotating two-part centering mandrel (13) consisting of a clamping element (22) and a centering element (24). The upper portion (14) of the machine tool supports said clamping element (22). The machine (1) also includes a fixture element (41) mounted on a machine table (42) supported by the machine tool (1), to which fixture element (41) a workpiece (48) is clamped by a retaining device (39) with a view to being machined in a conventional manner by cutting tools (not depicted) driven by the machine tool (1).

Figure 1 depicts schematically a pneumatic system for manoeuvring the mandrel (13) during the centering, assembly and parting of the mandrel elements and during the clamping and release of workpieces (48). For the sake of clarity, only parts belonging to the mandrel (13) according to the invention are shaded in the diagram.

The pneumatic system includes a compressed air unit (2) which is connected by a first line (6) to a valve (3) via a pressure regulator (10), a moisture separating unit (11) and an oil mist unit (12) for adding lubricant to the compressed air. A second line (7) and a third line (8) connect the valve (3) to a pneumatically controlled connecting arrangement (29) arranged in the clamping element (22) for assembling and parting the two elements of the mandrel (13). A fourth line (26) connects the valve (3) to a first chamber (27) which is arranged in the centering element (24). A fifth line (28) connects the valve (3) to a second chamber (32) which is also arranged in the centering element (24). The second line (7) and the third line (8) respectively run through the upper portion (14) of the machine tool to the clamping element (22) of the mandrel. The valve (3), which also has a sixth connection (9) to atmospheric pressure, is controlled by a control unit (4) which receives signals via a cluster of lines (5) from a number of different sensors (not depicted) and controls the centering and clamping operation according to a predetermined sequence.

In the embodiment depicted in Figure 1 the upper portion (14) of the machine tool is of conventional design. This upper portion may of course be of some other suitable design and be used with the mandrel according to the invention. The upper portion (14) of the machine tool is supported for rotation and secured axially in the upper slide (54) of the machine tool and itself consists of an upper part (15) and a lower part (16). A certain axial relative movement is possible between these two parts (15,16). The lower part (16) is urged towards its upper end position depicted in Figure 1 by a spring element (17) which surrounds the upper portion of a guide pin (18) which is supported for movement in the upper part (15) and is fastened in the lower part (16). By bearing against an upper shoulder (19) on the pin (18) and on an upper surface (20) of the upper part (15) the spring (17) pushes the lower part (16) to abut against the upper part (15). The second line (7) and third line (8) which run through the upper portion (14) of the machine are respectively provided with sealing elements (21) to prevent leakage between the two parts (15,16).

The centering element (24) of the mandrel is detachably arranged in an appropriately designed guide in a fixture element (41) which is fastened to the circular feed table (42) of the machine tool. The centering element (24) consists of a lower fastening-in portion (53), an upper portion (51) and a top portion (52). The top portion takes the form of a first fastening head (52).

The centering element (24) is equipped with a conventional centering device which incorporates a cylinder (25) which is divided into the aforesaid first chamber (27) and second chamber (32) by a ram (33) which is movable axially. The ram (33) is provided with a number of inclined planes (36) intended to cause a number of centering devices (35) to center with respect to the workpiece (48). The centering devices (35) move in a plane perpendicular to the longitudinal axis of the mandrel (13), through a respective hole intended for the purpose in the wall of the centering element (24), when the ram (33) is moved in the axial longitudinal direction of the centering element (24) by means of compressed air. Each chamber (27,32) has a stop device (30,31) fastened to its inside wall.

Compressed air is led into the chambers via the fourth and fifth lines (26,28) and a rotating connection (49) which is arranged round the outer periphery of the fixture element (41). The centering element (24) is provided round its periphery with circular recesses (50) at the same height as the transitions of the pressure lines (26,28) between the fixture (41) and the centering element (24). This means that the grooves (50) communicate with the pressure chambers (27,32), resulting in a positive pressure between the centering element (24) and the guide of the fixture element (41). This makes it difficult for dust and dirt to make their way down into the guide of the fixture. There is also leakage flow from the chambers (32,27) through the holes in the centering pins. The compressed air leakage at both these points results in reduced wear on vital parts of the centering element and hence longer service life.

The upper portion (51) of the centering element has in the embodiment described a somewhat smaller diameter than the portion (53) which is fitted into the guide of the fixture (41). This upper portion (51) may on different mandrels be suited to the diameter of the hole in the workpiece (48), whereas the fastening-in element (53) is independent of the workpiece hole diameter and can therefore always have the same diameter (a). Its diameter and guide length have to be large enough to ensure that the centering element (24) is firmly fastened in the fixture. A suitable fastening-in diameter (a) may be standardised. Hence there is no need for the guide in the fixture element (41) to be changed when rerigging to other types of mandrels.

The upper part of the mandrel (13), i.e. the clamping element (22), is detachably fastened to the upper portion of the machine tool (14) by means of a number of fastening devices (23) which according to this embodiment consist of threaded connections. The clamping element (22) includes a retaining portion (34) in which a second fastening head (37) is arranged with a certain play in the radial direction with respect to the centreline of the mandrel. This allows the fastening head (37) some movement in a lateral direction when the fastening heads (37,52) of the two mandrel elements are being assembled. the clamping element (22) also incorporates a connecting arrangement (29), in this embodiment a pneumatically controlled clamp coupling (29) (depicted only schematically in Figure 1). The clamp coupling (29) holds together the two fastening heads (37,52) and hence the two elements (22,24) of the mandrel (13) during the machining process proper.

To keep the workpiece (48) firmly in position during machining, the retaining device (39), here in the form of a bell clamp, is arranged non-rotatably on the clamping element (22). By the action of a hydraulic cylinder (63) arranged in the machine tool (1) and depicted here schematically, the bell clamp (39) can be caused to clamp or release the workpiece (48) by lowering the machine tool's upper portion (14) and the clamping element (22) fastened to it. The bell clamp (39), which in the axial direction clamps the workpiece (48) firmly to the fixture when the mandrel elements (22,24) have been assembled and are thereafter moved down towards the machine table, is detachably fastened to the clamping element (22).

The procedure for setting up the machine tool is as follows:

The machine's upper portion (14) is mounted and supported for rotary movement but secured against axial movement in the machine tool's upper slide (54) in any known manner. This is usually done only on the occasion of new installation. Thereafter the mandrel's clamping element (22) is fitted and secured to the upper portion (14) by threaded connections (23). The mandrel's centering element (24) is fitted into the fixture element (41) on the machine table (42). The guide in the fixture element (41) is designed so that the centering element (24) is precisely fixed radially but movable axially, so that no fixed connection need be released when rerigging this mandrel element (24).

For carrying out the machining operation, the workpiece (48) is then threaded over the top (52) and the upper portion (51) of the centering element (24) so that it rests on the fixture (41).

The next stage is to lower, by means of the hydraulic cylinder (63), the machine's upper portion (14), and the clamping element (22) fitted firmly to the latter, so that the lower surface of the latter's fastening head (37) comes into contact with or nearly into contact with the upper surface of the centering element's fastening head (52). This position is defined by the bell clamp (39) not clamping against the workpiece (48) but by the centering pins (35) being in a position to clamp radially against the workpiece (48). A suitable distance between the workpiece's upper surface and the bell clamp is between 0.5 and 1 mm. This makes it possible for the workpiece (48) to move radially during the centering. Reaching the correct position is detected by conventional position sensors (not depicted) which via the control unit (4) co-operate with the hydraulic system (44) so that a signal goes to a solenoid valve (64) which acts upon the hydraulic cylinder (63) so that the positioning movement ceases.

Thereafter the workpiece is centred while at the same time the two mandrel elements (22,24) are being assembled. The actual centering procedure is known from WO94/06590 A1 and will therefore not be described in more detail here. Assembly takes place as follows:

The clamping element (22) and the centering element (24) are pressurised via the first line (6) from the compressed air unit (2) to the valve (3) which in a primary position (Figure 1 shows the secondary position of the valve (3)) passes the pressure on to a second line (7) and fourth line (26) while at the same time the third line (8) and fifth line (28) are connected to atmospheric pressure via the valve's sixth connection (9). The pressure in the fourth line (26) goes to the centering element (24) for centering in a conventional manner. The pressure in the second line (7) passes through the machine tool's upper portion (14) and the clamping element (22) to the latter's coupling arrangement (29). In this embodiment the latter is a clamp coupling and the compressed air causes it to couple together the two now mutually opposite fastening heads (37,52). As the centering element (24) and hence its fastening head are radially fixed in the fixture element (41) and the fastening element's fastening head (37) is arranged in the clamping element (22) with a certain play (38) in the radial direction, the fastening element's fastening head (37) is guided according to the centering element's fastening head (52) when the two fastening heads are coupled together. Oblique loads are thereby avoided. The coupling arrangement (29) may of course be of any other suitable design, e.g. a pneumatic bayonet coupling.

When a pressure sensor (65) detects that a predetermined pressure representing completed centering and completed assembly of the two mandrel elements has been reached, the control unit (4) receives a signal to that effect. Thereafter the control unit (4) delivers a signal to a solenoid valve unit (45) forming part of a conventional hydraulic system (44) depicted schematically in Figure 1, which acts upon two hydraulic cylinders (46,47). One of the hydraulic cylinders (47) causes a gripping device (43) arranged in the machine table (42) to grip a waist portion (40) formed at the lower end of the centering element (24), after which the other hydraulic cylinder (46), by means of the gripping device (43), moves the whole mandrel (13), which is now assembled, axially downwards against the action of the spring element (17), so that the bell clamp (39) clamps onto the workpiece (48). The workpiece (48) can thus be clamped firmly to the fixture (41) with the desired force. This axial force is substantially greater than the radial centering force, which means that the centering pins (35) will slide somewhat relative to the inside surface of the workpiece (48).

The axial downward movement is small, preferably only a couple of millimetres. This means that the centering element's circular recesses (50) are in communication with the pressure lines (26,28) even after the fully assembled mandrel (13) has moved downwards. The cleaning effect of the compressed air leakage therefore continues throughout the machining process.

During the machining phase, the mandrel (13) is driven by the machine table (42) which is itself driven by a motor arranged in the machine tool (1). Rotary force is transmitted from the table (42) to the mandrel (13) via the fixture (41) and the workpiece (48) clamped between the fixture (41) and the bell clamp (39) to the bell clamp (39) arranged non-rotably on the mandrel. Rotation may take place either in stages or steplessly depending on the type of machining. According to a possible alternative embodiment, the machining tool moves round the workpiece (48), while the mandrel (13) remains stationary.

On completion of machining, the release procedure is as follows:

The control unit (4) receives either manually or automatically a signal that the machining has been completed, whereupon it delivers a signal to the hydraulic system (44) which releases and removes the clamping device (43) from the waist portion (40) of the centering element (24). This results in the spring element (17) urging the fully assembled mandrel (13) to revert to the position depicted in Figure 1, thereby releasing the bell clamp (39) from the workpiece (48).

The control unit (4) then moves the valve (3) to the secondary position depicted in Figure 1 whereby the pressure is passed on to the third line (8) and fifth line (28) while at the same time the second line (7) and fourth line (26) are connected to atmospheric pressure via the valve's sixth connection (9). The pressure in the fifth line (28) goes to the centering element (24) to release the centering in a manner which is conventional and is therefore not described in more detail here. The pressure in the third line (8) is led to the clamp coupling (29), which is thereby released so that the mandrel's two elements are released from one another.

When the control unit (4) has received signals that both the gripping device (43) and the centering pins (35) have been freed from the workpiece (48) and the clamp coupling (29) has been released, a signal is delivered to the hydraulic system (44) for the hydraulic cylinder (63) incorporated therein to cause axial movement of the machine tool's upper portion (14) and the clamping element (22) fastened to the latter. As a final stage, the clamping element (22) is thereby raised by the hydraulic cylinder so that the workpiece (48) can be removed and a new workpiece be placed on the mandrel's centering element (24) for machining.

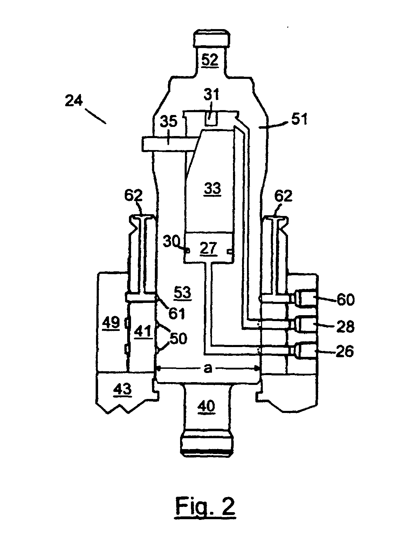

Figure 2 depicts an alternative embodiment of a centering element (24) for a mandrel. This centering element (24) makes it possible to check the workpiece's abutment against the fixture (41). This is achieved by the rotary coupling (49) being provided additionally with a line (60) for compressed air. From the inlet, the air passes through the fixture both to a recess (61) round the centering element's periphery at the same height as the inlet to the pressure line (60), and to a number of outlets (62) in the fixture's surface in contact with the workpiece. The compressed air in the recess (61) results in dust and dirt being kept away from the centering element's bearing in the fixture (41).

Air coming from the compressed air unit (2) in a manner not shown in detail, at a uniform pressure, passes through the outlets (62). When a workpiece is positioned correctly on the fixture (41), the outlet holes (62) close, thereby increasing the air pressure in the line (60). When a pressure sensor (not depicted) detects a predetermined pressure which represents the workpiece (48) abutting in a planar manner on the fixture (41), the control unit (4) receives a signal to that effect and thereafter delivers signals for continued assembling and centering in the manner described above. Should there for any reason be dirt on the contact surface of the fixture (41) when the workpiece (48) is placed there, the outlet holes (62) do not close fully and the air pressure in the line (60) does not reach the predetermined level. When this is detected by the pressure sensor, the operator is warned, e.g. by an auditory or light signal, that the workpiece is not correctly positioned on the fixture because of dirt or the like. The fault may therefore be rectified and the process may only continue when the pressure sensor detects the predetermined pressure. Should the machining process continue despite there being dirt between the workpiece and the fixture, the machining result may be unsatisfactory.

The upper portion of the centering element (24) according to the embodiment depicted in Figure 2 may of course also have various diameters suited to the workpiece hole diameters. The fastening diameter (a) is preferably large enough to result in stable fastening of the centering element (24) in the fixture (41).

As the mandrel's centering element (24) with its stable fastening in the fixture (41) comprises the most important components for a centering machining process, the mandrel's upper element (22) and also the machine tool's upper portion may be of somewhat simplified design. Their primary function is to ensure that the bell clamp (39) clamps the workpiece (48) to the fixture. The components arranged in the machine tool's slide (54) might possibly be entirely removed and the bell clamp might then be applied in a different manner.

The embodiment refers only to machining one workpiece, but the arrangement according to the invention might also be used for centering two or more workpieces placed on top of one another. In that case the centering element is extended and equipped with a number of centering devices.

According to an alternative embodiment the mandrel may have horizontal orientation. In that case the axial ends of the mandrel elements may be supported for rotation on the machine tool.

## Claims

1. Arrangement for centering at least one workpiece (48) in a machine tool (1), which arrangement includes a centering mandrel (13) which incorporates a pressure-medium-controlled centering device (33,35) for centering the workpiece (48), **characterised in that** the centering mandrel (13) comprises two parts, namely a centering element (24), arranged in a fixture element (41) arranged on the machine tool (1), and a clamping element (22), which mandrel parts (22,24) can be locked together, and **in that** the centering element (24) is adapted to have the workpiece (48) threaded onto it, wherein the workpiece (48) rests on the fixture element (41) and **in that** the clamping element (22) incorporates a coupling arrangement (29) by means of which the two mandrel elements (22,24) can be locked together to form a unit and released in order to be separated from one another to make it possible to thread the workpiece (48) upon and remove it from the centering element (24).

2. Arrangement according to claim 1, **characterised in that** the mandrel's clamping element (22) incorporates a retaining device (39) intended to abut against and secure the workpiece, and the coupling arrangement (29) for coupling the clamping element (22) and the centering element (24) together to form a unitary mandrel (13) for centering the workpiece (48).

3. Arrangement according to claim 2, **characterised in that** the coupling arrangement (29) is provided with play for unforcible adaptation to the radial bearing of the centering element (24) in the fixture element (41).

4. Arrangement according to one of the foregoing claims **characterised in that** the pressure medium is compressed air and that the centering element (24) includes the pneumatically controlled centering devices (33,35) and is fixed radially and fitted for axial movement in a fixture element (41) supported on the machine tool, wherein the fixture element (41) has pressure lines (26,28) which lead compressed air from the pressure source (2) to the centering devices (33,35), while at the pneumatic transition between the fixture element (41) and the centering element (24) compressed air leakage is allowed between the centering element (24) and the fixture (41).

5. Arrangement according to claim 4, in which the workpiece (48) is centred about a substantially vertical axis, **characterised in that** the fixture element (41) includes additionally a pressure line (60) whereby compressed air is led from the pressure source (2) to a number of outlets (62) in the horizontal upper surface of the fixture (41), which surface is intended to support the workpiece (48), and a pressure sensor (65) detects how the air pressure varies depending on whether the workpiece (48) is or is not positioned in a planar manner on the contact surface of the fixture (41).

6. Arrangement according to either of claims 4 and 5, **characterised in that** the centering element (24) is provided, round its periphery, with grooves (50,61) which are situated at substantially the same vertical level as the delivery points of the pressure lines (26,28) to the fixture element (41) and therefore communicate with pressure chambers (27,32) contained in the centering element (24), and pressure supply results in a positive pressure between the centering element (24) and the guide of the fixture element (41) round the periphery of the centering element.

7. Arrangement according to claim 3, **characterised in that** the coupling arrangement (29) is pneumatically operated and incorporates a retaining portion (34) and a fastening head (37) which is arranged with radial play (38) and which is able, when being coupled to the radially fixed centering element (24), to be guided according to the centering element's fixed position when the coupling arrangement (29) assembles the two parts of the mandrel (13).

8. Arrangement according to claim 7, **characterised in that** the coupling arrangement (29) is pneumatically controlled and is connected to the pressure source (2) by pressure lines (6,7).

9. Arrangement according to any one of the foregoing claims, **characterised in that** the diameter (a) of the portion of the centering element (24) which is fitted in the fixture (41) is independent of the diameter of the centrehole in the workpiece (48).

10. Arrangement according to claim 9, **characterised in that** the diameter (a) of the portion of the centering element (24) which is fitted in the fixture element (41) is equal to or larger than the diameter of the centrehole in the workpiece (48).

11. Arrangement according to any one of the foregoing claims, **characterised in that** the centering device (33,35) incorporates a first chamber (27) and second chamber (32) which are connected by lines (6,26,28) to the pressure source (2) and are situated on either side of at least one ram (33) which, depending on the pressure in the respective chambers (27,32), can move in a cylinder (25) arranged in the mandrel (13) and has a motion-transmitting connection with a number of centering devices (35) which are situated substantially symmetrically about the mandrel's centreline and are intended for radial inward and outward movement relative to the centreline of the mandrel (13), movement of the devices being caused by pressure medium from the pressure source (2).

12. Arrangement according to any one of the foregoing claims, **characterised in that** the mandrel's clamping element (22) incorporates a retaining device (39) intended to abut against and secure the workpiece when the latter is being machined in the machine tool.

## Patentansprüche

1. Anordnung zum Zentrieren wenigstens eines Werkstücks (48) in einer Werkzeugmaschine (1), wobei die Anordnung eine Zentrierspindel (13) aufweist, die eine Druckmedium-gesteuerte Zentriervorrichtung (33, 35) zum Zentrieren des Werkstücks (48) umfasst, **dadurch gekennzeichnet, dass** die Zentrierspindel (13) zwei Teile umfasst, nämlich ein Zentrierelement (24), das in einem an der Werkzeugmaschine (1) angeordneten Befestigungselement (41) angeordnet ist, und ein Klemmelement (22), wobei die Spindelteile (22, 24) zueinander verriegelt werden können, und dass das Zentrierelement (24) derart ausgelegt ist, dass das Werkstück (48) auf dieses aufgeschraubt wird, wobei das Werkstück (48) auf dem Befestigungselement (41) aufliegt, und dass das Klemmelement (22) eine Kupplungsanordnung (29) aufweist, mittels der die zwei Spindelelemente (22, 24) miteinander verriegelt werden können, so dass sie eine Einheit bilden, und zueinander freigegeben werden können, so dass sie voneinander getrennt werden können, um zu ermöglichen, dass das Werkstück (48) auf das Zentrierelement (24) aufgeschraubt oder von diesem entfernt wird.

2. Anordnung nach Anspruch 1, **dadurch gekennzeichnet, dass** das Klemmelement (22) der Spindel eine Haltevorrichtung (39) aufweist, die dazu ausgelegt ist, in Anlage mit dem Werkstück zu treten und dieses zu sichern, und eine Kupplungsanordnung (29) aufweist zum Koppeln des Klemmelements (22) und des Zentrierelements (24) miteinander, um eine als Enheit ausgebildete Spindel (13) zum Zentrieren des Werkstücks (48) auszubilden.

3. Anordnung nach Anspruch 2, **dadurch gekennzeichnet, dass** die Kupplungsanordnung (29) mit Spiel zur leichten Anpassung an das Radiallager des Zentrierelements (24) in dem Befestigungselement (41) vorgesehen ist.

4. Anordnung nach einem der vorangehenden Ansprüche, **dadurch gekennzeichnet, dass** das Druckmedium Druckluft ist und dass das Zentrierelement (24) die pneumatisch gesteuerten Zentriervorrichtungen (33, 35) umfasst und radial fixiert ist und zur axialen Bewegung in einem an der Werkzeugmaschine gelagerten Befestigungselement (41) eingesetzt ist, wobei das Befestigungselement (41) Druckleitungen (26, 28) aufweist, die Druckluft von der Druckquelle (2) zu den Zentriervorrichtungen (33, 35) führen, wobei an der pneumatischen Schnittstelle zwischen dem Befestigungselement (41) und dem Zentrierelement (24) eine Druckluftleckage zwischen dem Zentrierelement (24) und der Befestigung (41) zugelassen ist.

5. Anordnung nach Anspruch 4, wobei das Werkstück (48) um eine im Wesentlichen vertikale Achse zentriert ist, **dadurch gekennzeichnet, dass** das Befestigungselement (41) zusätzlich eine Druckleitung (60) umfasst, wobei die Druckluft von der Druckquelle (2) über eine Mehrzahl von Auslässen (62) in der horizontalen oberen Oberfläche der Befestigung (41) geführt wird, wobei die Oberfläche dazu ausgelegt ist, das Werkstück (48) zu lagern, und wobei ein Drucksensor (65) erfasst, wie die Druckluft in Abhängigkeit davon schwankt, ob das Werkstück (48) in ebener Ausrichtung auf der Kontaktoberfläche der Befestigung (41) positioniert ist oder nicht.

6. Anordnung nach einem der Ansprüche 4 und 5, **dadurch gekennzeichnet, dass** das Zentrierelement (24) entlang seinem Umfang mit Vertiefungen (50, 61) versehen ist, die auf im Wesentlichen demselben vertikalen Niveau angeordnet sind, wie die Ausgangsstellen der Druckleitungen (26, 28) zu dem Befestigungselement (41), und deshalb mit den Druckkammern (27, 32) kommunizieren, die in dem Zentrierelement (24) enthalten sind, und wobei die Druckzuführung zu einem Überdruck zwischen dem Zentrierelement (24) und der Führung des Befestigungselements (41) um den Umfang des Zentrierelements herum führt.

7. Anordnung nach Anspruch 3, **dadurch gekennzeichnet, dass** die Kupplungsanordnung (29) pneumatisch betätigt wird und einen Haltebereich (34) und einen Befestigungskopf (37) umfasst, der mit radialem Spiel (38) angeordnet ist und der dazu ausgebildet ist, dass er dann, wenn er mit dem radial fixierten Zentrierelement (24) gekoppelt ist, nach Maßgabe der fixierten Position des Zentrierelements geführt wird, wenn die Kupplungsanordnung (29) die beiden Teile der Spindel (13) zusammenfügt.

8. Anordnung nach Anspruch 7, **dadurch gekennzeichnet, dass** die Kupplungsanordnung (29) pneumatisch gesteuert ist und mit der Druckquelle (2) durch Druckleitungen (6, 7) verbunden ist.

9. Anordnung nach einem der vorangehenden Ansprüche, **dadurch gekennzeichnet, dass** der Durchmesser (a) des Abschnitts des Zentrierelements (24), der in die Befestigung (41) eingesetzt ist, von dem Durchmesser des Zentrierlochs in dem Werkstück (48) unabhängig ist.

10. Anordnung nach Anspruch 9, **dadurch gekennzeichnet, dass** der Durchmesser (a) des Abschnitts des Zentrierelements (24), das in dem Befestigungselement (41) eingesetzt ist, größer oder gleich dem Durchmesser des Zentrierlochs in dem Werkstück (48) ist.

11. Anordnung nach einem der vorangehenden Ansprüche, **dadurch gekennzeichnet, dass** die Zentriervorrichtung (33, 35) eine erste Kammer (27) und eine zweite Kammer (32) umfasst, die durch Leitungen (6, 26, 28) mit der Druckquelle (2) verbunden sind und auf jeder Seite wenigstens eines Stempels (33) angeordnet sind, der sich in Abhängigkeit von dem Druck in den jeweiligen Kammern (27, 32) in einem Zylinder (25) bewegen kann, der in der Spindel (13) angeordnet ist, und eine bewegungsübertragende Verbindung mit einer Vielzahl von Zentriervorrichtungen (35) aufweist, die im Wesentlichen symmetrisch um die Mittellinie der Spindel herum angeordnet sind und für eine radial einwärts oder auswärts gerichtete Bewegung retativ zu der Mittellinie der Spindel (13) vorgesehen sind, wobei die Bewegung der Vorrichtungen durch das Druckmedium aus der Druckwelle (2) bewirkt wird.

12. Anordnung nach einem der vorangehenden Ansprüche, **dadurch gekennzeichnet, dass** das Klemmelement (22) der Spindel eine Haltevorrichtung (39) umfasst, die dazu vorgesehen ist, in Anlage mit dem Werkstück zu treten und dieses festzulegen, wenn Letzteres in der Werkzeugmaschine bearbeitet wird.

## Revendications

1. Agencement pour centrer au moins une pièce à usiner (48) dans une machine-outil (1), lequel agencement comprend un mandrin de centrage (13) qui renferme un dispositif de centrage (33, 35) commandé par un milieu sous pression, pour centrer la pièce à usiner (48), **caractérisé en ce que** le mandrin de centrage (13) comprend deux parties, à savoir un élément de centrage (24) agencé dans un élément de dispositif de fixation (41) disposé sur la machine-outil (1), et un élément de serrage (22), lesquelles parties (22, 24) de mandrin peuvent être bloquées ensemble, et **en ce que** l'élément de centrage (24) peut comporter une pièce à usiner (48) vissée sur celui-ci, la pièce à usiner (48) reposant sur l'élément de dispositif de fixation (41), et **en ce que** l'élément de serrage (22) renferme un dispositif de couplage (29) à l'aide duquel les deux éléments (22, 24) de mandrin peuvent être bloqués ensemble de manière à former une unité et libérés de manière à être séparés l'un de l'autre, afin qu'il soit possible de visser la pièce à usiner (48) sur l'élément de centrage (24) et de la retirer de celui-ci.

2. Agencement selon la revendication 1, **caractérisé en ce que** l'élément de serrage (22) du mandrin renferme un dispositif de retenue (39) prévu pour faire appui contre la pièce à usiner et assujettir celle-ci, et l'agencement de couplage (29) pour coupler ensemble l'élément de couplage (22) et l'élément de centrage (24) afin de former un mandrin unitaire (13) pour centrer la pièce à usiner (48).

3. Agencement selon la revendication 2, **caractérisé en ce que** l'agencement de couplage (29) est prévu avec un jeu en vue d'une adaptation non forcée au support radial de l'élément de centrage (24) agencé dans l'élément de dispositif de fixation (41).

4. Agencement selon l'une quelconque des revendications précédentes, **caractérisé en ce que** le milieu sous pression est l'air comprimé et **en ce que** l'élément de centrage (24) comprend les dispositifs de centrage (33, 35) à commande pneumatique, et est fixé radialement et ajusté en vue d'un mouvement axial dans un élément de dispositif de fixation (41) supporté sur la machine-outil, l'élément de dispositif de fixation (41) présentant des conduites de pression (26, 28) qui acheminent l'air comprimé de la source de pression (2) aux dispositifs de centrages (33, 35), alors qu'au niveau de la transition pneumatique entre l'élément de dispositif de fixation (41) et l'élément de centrage (24) une fuite d'air comprimé est autorisée entre l'élément de centrage (24) et le dispositif de fixation (41).

5. Agencement selon la revendication 4, dans lequel la pièce à usiner (48) est centrée autour d'un axe sensiblement vertical, **caractérisé en ce que** l'élément de dispositif de fixation (41) comprend, en outre, une conduite de pression (60) de sorte que l'air comprimé soit acheminé de la source de pression (2) à un certain nombre de sorties (62) se trouvant sur la surface horizontale supérieure du dispositif de fixation (41), laquelle surface est prévue pour supporter la pièce à usiner (48), et un capteur de pression (65) détecte comment la pression d'air varie selon que la pièce à usiner (48) est ou n'est pas placée de manière plane sur la surface de contact du dispositif de fixation (41).

6. Agencement selon les revendications 4 ou 5, **caractérisé en ce que** l'élément de centrage (24) est prévu, autour de sa périphérie, avec des rainures (50, 61) qui sont situées sensiblement au même niveau vertical que celui des points de fourniture des conduites de pression (26, 28) par rapport à l'élément de dispositif de fixation (41), et qui communiquent, par conséquent, avec des chambres de pression (27, 32) contenues dans l'élément de centrage (24), et l'alimentation en pression se traduit par une pression positive entre l'élément de centrage (24) et le dispositif de guidage de l'élément de dispositif de fixation (41) autour de la périphérie de l'élément de centrage.

7. Agencement selon la revendication 3, **caractérisé en ce que** l'agencement de couplage (29) est à commande pneumatique et renferme une partie de retenue (34) et une tête d'attache (37) qui est agencée avec un jeu radial (38) et qui peut, lorsqu'elle est couplée à l'élément de centrage (24) radialement fixe, être guidée selon la position fixe de l'élément de centrage lorsque l'agencement de couplage (29) assemble les deux parties du mandrin (13).

8. Agencement selon la revendication 7, **caractérisé en ce que** l'agencement de couplage (29) est à commande pneumatique et est relié à la source de pression (2) par des conduites de pression (6, 7).

9. Agencement selon l'une quelconque des revendications précédentes, **caractérisé en ce que** le diamètre (a) de la partie de l'élément de centrage (24) qui d'emboîte dans le dispositif de fixation (41) est indépendant du diamètre du trou médian ménagé dans la pièce à usiner (48).

10. Agencement selon la revendication 9, **caractérisé en ce que** le diamètre (a) de la partie de l'élément de centrage (24) qui est montée dans l'élément de dispositif de fixation (41) est égal ou supérieur au diamètre du trou médian ménagé dans la pièce à usiner (48).

11. Agencement selon l'une quelconque des revendications précédentes, **caractérisé en ce que** le dispositif de centrage (33, 35) renferme une première chambre (27) et une deuxième chambre (32) qui sont reliées par des conduites (6, 26, 28) à la source de pression (2) et sont situées sur chaque côté d'au moins un piston (33) qui peut, en fonction de la pression régnant dans les chambres (27, 32) respectives, se déplacer dans un cylindre (25) agencé dans le mandrin (13), et comporte une liaison de transmission de mouvement avec un certain nombre de dispositifs de centrage (35) qui sont situés sensiblement symétriquement autour de la ligne médiane du mandrin et sont prévus pour un mouvement radial intérieur et extérieur par rapport à la ligne médiane du mandrin (13), le mouvement des dispositifs étant provoqué par le milieu sous pression à partir de la source de pression (2).

12. Agencement selon l'une quelconque des revendications précédentes, **caractérisé en ce que** l'élément de serrage (22) du mandrin renferme un dispositif de retenue (39) prévu pour faire appui contre la pièce à usiner et pour l'assujettir lorsque celle-ci est usinée dans la machine-outil.
